(19) Europäisches Patentamt
European Patent Office
Office européen des brevets

(11) Veröffentlichungsnummer: **0 319 816 B1**

(12) **EUROPÄISCHE PATENTSCHRIFT**

(45) Veröffentlichungstag der Patentschrift: **11.11.92**

(51) Int. Cl.$^5$: **C08G 18/10**, C08G 18/30, C08G 18/32, C08G 18/38, C08G 18/48, D06N 3/00

(21) Anmeldenummer: **88119775.0**

(22) Anmeldetag: **28.11.88**

Die Akte enthält technische Angaben, die nach dem Eingang der Anmeldung eingereicht wurden und die nicht in dieser Patentschrift enthalten sind.

# (54) Polyurethanharnstoffe.

(30) Priorität: **08.12.87 DE 3741538**

(43) Veröffentlichungstag der Anmeldung:
**14.06.89 Patentblatt 89/24**

(45) Bekanntmachung des Hinweises auf die Patenterteilung:
**11.11.92 Patentblatt 92/46**

(84) Benannte Vertragsstaaten:
**AT BE DE ES FR GB IT NL**

(56) Entgegenhaltungen:
**EP-A- 0 279 198**
**FR-A- 2 184 735**
**FR-A- 2 362 171**
**GB-A- 2 143 836**
**US-A- 3 734 894**
**US-A- 4 513 112**

**CHEMICAL ABSTRACTS, Band 90, Nr. 26, Juni 1979, Seite 36, Zusammenfassung nr. 205006m, Columbus, Ohio, US; V.M. NEPYSHNEVSKII et al: "Hydrophilic poly(ether urethane ureas) for synthetic leather", & KOLLOIDN. ZH. 1979, 41(2), 258-62**

(73) Patentinhaber: **BAYER AG**

**W-5090 Leverkusen 1 Bayerwerk(DE)**

(72) Erfinder: **Pedain, Josef, Dr.**
**Haferkamp 6**
**W-5000 Köln 80(DE)**
Erfinder: **Pisaric, Karl Heinz**
**Max-Liebermann-Strasse 47**
**W-5024 Pulheim(DE)**
Erfinder: **Schröer, Walter, Dr.**
**Nicolai-Hartmann-Strasse 29**
**W-5090 Leverkusen(DE)**
Erfinder: **Thoma, Wilhelm, Dr.**
**Birkenweg 25**
**W-5090 Leverkusen 3(DE)**
Erfinder: **Träubel, Harro, Dr.**
**Dresdener Strasse 14**
**W-5090 Leverkusen(DE)**
Erfinder: **Weber, Karl-Arnold, Dr.**
**Saarstrasse 59**
**W-5090 Leverkusen(DE)**

EP 0 319 816 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyurethanharnstoffe, Verfahren zu ihrer Herstellung sowie Verfahren zur Reaktivbeschichtung von Substraten, insbesondere von Flächengebilden aus Textil oder Leder, unter Verwendung der Polyurethanharnstoffe.

Die Reaktivbeschichtung von Substraten mit Polyurethanen ist an sich bekannt. Man appliziert dabei, vorzugsweise mittels einer Sprühpistole, die gegebenenfalls in einem geeigneten Lösungsmittel gelösten Ausgangsprodukte.

Gemäß dem Stand der Technik werden Isocyanatgruppen aufweisende Prepolymere und ausgewählte Polyamine, z.B. reaktionsfähige aromatische oder sterisch gehinderte Polyamine, intensiv vermischt, und entweder direkt auf ein zu beschichtendes Substrat oder vorzugsweise auf einen einstweiligen Träger aufgesprüht und anschließend das zu beschichtende Substrat, z.B. Leder, Papier, Vliesstoffe oder textile Bahnen zukaschiert und die beschichtete Ware in einem Trockenkanal zur Weiterreaktion der Beschichtung transportiert. Anschließend zieht man das weitgehend ausreagierte Material vom Trennträger ab. Repräsentativ für diesen Stand det Technik sind z.B. DE-OS 1 570 524 (US-PS 3 475 266), DE-AS 2 637 115 (US-PS 4 108 842) und DE-OS 2 826 232 sowie die dort zitierte Literatur.

Die vorliegende Erfindung betrifft in einem Aspekt ein verbessertes Verfahren insbesondere zur Umkehrbeschichtung solcher Substrate unter Verwendung eines neuen Polyurethan-Reaktivsystems. In einem weiteren Aspekt betrifft die Erfindung neue Polyurethanharnstoffe, die aus dem genannten Polyurethan-Reaktivsystem erhältlich sind.

Die erfindungsgemäßen Polyurethanharnstoffe sind dadurch erhältlich, das man ein hydrophiles NCO-Prepolymer, das unter Verwendung einer Polyhydroxykomponente hergestellt worden ist, die 9-100 Gew.-% eines Polyethers mit etwa 30 bis etwa 100 Gew.-% Ethylenoxidanteil enthält oder ein Gemisch aus dem genannten hydrophilen NCO-Prepolymer und einem hydrophoben NCO-Prepolymer, wobei dieses Gemisch ≥30 Gew.-% des hydrophilen Prepolymers umfaßt, mit einem ketiminhaltigen Härtergemisch in Gegenwart von Wasser und organischen Lösungsmitteln unter Umsatz von 30 bis 70 % der NCO-Gruppen der Prepolymere reagieren läßt. Bevorzugt enthält die Polyhydroxykomponente 16 bis 64 Gew.-% des Polyethers.

Das Prepolymergemisch enthält insbesondere 40 bis 80 Gew.-% des hydrophilen NCO-Prepolymers.

Die Umsetzung des hydrophilen NCO-Prepolymers oder des NCO-Prepolymergemischs mit dem ketiminhaltigen Härtergemisch erfolgt bevorzugt zu 40 bis 60 %, d.h. daß der Härter im Unterschuß vorliegt, und das anwesende Wasser zur weiteren Vernetzungsreaktion bis zum Erreichen des Äquivalenzproduktes dient.

Für den Aufbau der erfindungsgemäß einzusetzenden NCO-Vorpolymerisate kommen Polyisocyanate in Frage, die eine durchschnittliche NCO-Funktionalität von mindestens 1,8 haben. Es sind dies aliphatische, aromatische und heterocyclische Polyisocyanate, wie sie z.B. von W.Siefken in Justus Liebigs Annalen der Chemie, 562, Seiten 75 bis 136, beschrieben werden, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-AS 1 202 785, US-PS 3 401 190), 2,4- und 2,6-Hexahydrotoluylendiisocyanatsowie beliebige Gemische dieser Isomeren, Hexahydro-1,3- und/oder -1,4-phenylen-diisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat, Triphenylmethan-4,4′,4″-triisocyanat, Polyphenylpolymethylenpolyisocyanate, wie sie durch Anilin-Formaldehyd-Kondensation und anschließende Phosgenierung erhalten und z.B. in den GB-PSen 874 430 und 848 671 beschrieben werden, m- und p-Isocyanatophenylsulfonylisocyanate gemäß der US-PS 4 454 606, perchlorierte Arylpolyisocyanate wie sie z.B. in der DE-AS 1 157 601 (US-PS 3 277 138) beschrieben werden, Carbodiimidgruppen aufweisende Polyisocyanate, wie sie in der DE-PS 1 092 007 (US-PS 3 152 162) beschrieben werden, Diisocyanate, wie sie in der US-PS 3 492 330 beschrieben werden, Allophanatgruppen aufweisende Polyisocyanate, wie sie z.B. in der GB-PS 994 890, der BE-PS 761 626 und der veröffentlichten niederländischen Patentanmeldung 7 102 524 beschrieben werden, Isocyanuratgruppen aufweisende Polyisocyanate, wie sie in der US-PS 3 001 973, in den DE-PSen 1 022 789, 1 222 067 und 1 027 394 sowie in den DE-OSen 1 929 034 und 2 004 048 beschrieben werden, Urethangruppen aufweisende Polyisocyanate, wie sie in der BE-PS 752 261 oder in der US-PS 3 394 164 beschrieben werden, acylierte Harnstoffgruppen aufweisende Polyisocyanate gemäß der DE-PS 1 230 778, Biuretgruppen aufweisende Polyisocyanate, wie sie z.B. in der DE-PS 1 101 394 (US-PSen 3 124 605 und 3 201 372) sowie in der GB-PS 889 050 beschrieben werden, durch Telomerisationsreaktionen hergestellte Polyisocyanate, wie sie in der US-PS 3 654 106 beschrieben werden, Estergruppen aufweisende Polyisocyanate, wie sie in den GB-PSen 965 474 und 1 072 956, in der US-PS 3 567 763 und in der DE-PS 1 231 688 genannt werden, Umsetzungsprodukte der obengenannten Isocyanate mit Acetalen gemäß der De-PS 1 072 385 und polymere Fettsäurereste enthaltende Polyisocyanate gemäß der US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden 1-Isocyanato-3,5,5-trimethyl-5-isocyanatomethylcyclohexan, Perhydro-4,4′-diphenylmethandiisocyanat, die isomeren Toluylendiisocyanate, 4,4′-Diphenylmethandiisocyanat, 1,6-Hexamethylendiisocyanat, trimeres Toluylendiisocyanat, das Umsetzungsprodukt aus 1 Mol Trimethylolpropan und 3 Mol Toluylendiisocyanat sowie das Mischtrimerisat aus 3 Mol Toluylendiisocyanat und 2 Mol Hexamethylendiisocyanat.

Als Reaktionspartner für die genannten Polyisocyanate zur Herstellung der NCO-Vorpolymeren kommen Polyhydroxylverbindungen in Frage, die 2 bis 8 Hydroxylgruppen aufweisen und ein Molekulargewicht von 400 bis 10 000, vorzugsweise 1000 bis 6000 haben, z.B. mindestens 2, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäure können auch die entsprechenden Polycarbonsäureanhydride oder entsprechende Polycarbonsäureester von niedrigen Alkoholen oder deren Gemisch zur Herstellung der Polyester verwendet werden. Die Polycarbonsäure können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endometylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\epsilon$-Caprolacton oder Hydroxycarbonsäuren, z.B. $\omega$-Hydroxycapronsäure, sind einsetzbar.

Auch die erfindungsgemäß in Frage kommenden, mindestens 2, in der Regel 2 bis 8, vorzugsweise 2 bis 3, Hydroxylgruppen aufweisende Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, 4,4′-Dihydroxydiphenylpropan, Anilin, Ethanolamin oder Ethylendiamin hergestellt. Auch Sucrosepolyether, wie sie z.B. in den DE-ASen 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie durch Polymerisation von Styrol und Acrylnitril in Gegenwart von Polyethern entstehen (US-PSen 3 383 351, 3 304 273, 3 523 093, 3 110 695, DE-PS 1 152 536), sind geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäure, Formaldehyd, Aminocarbonsäuren oder Aminoalkoholen angeführt. Je nach den Co-Komponenten handelt es sich bei den Produkten um Polythiomischether, Polythioetherester oder Polythioetheresteramide.

Als Polyacetale kommen z.B. die aus Glykolen, wie Diethylenglykol, Triethylenglykol, 4,4′-Dioxethoxydiphenyldimethylmethan, Hexandiol und Formaldehyd herstellbaren Verbindungen in Frage. Auch durch

Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate, wobei die Di- und Polyamine im Gemisch mit Aminoalkoholen und/oder Polyhydroxykomponenten eingesetzt werden.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyethern und Polyestern, eingesetzt werden.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den obengenannten, Hydroxylgruppen aufweisenden Verbindungen ablaufen läßt. Derartige Verfahren sind beispielsweise in den DE-ASen 1 168 075 und 1 260 142, sowie den DE-OSen 2 324 134, 2 423 984, 2 512 385, 2 513 815, 2 550 796, 2 550 797, 2 550 833 und 2 550 862 beschrieben. Es ist aber auch möglich, gemäß US-PS 3 869 413 bzw. DE-OS 2 550 860 eine fertige wäßrige Polymerdispersion mit einer Polyhydroxylverbindung zu vermischen und anschließend aus dem Gemisch das Wasser zu entfernen.

Bei der Verwendung von modifizierten Polyhydroxylverbindungen der obengenannten Art als Ausgangskomponente im Polyisocyanat-Polyadditionsverfahren entstehen in vielen Fällen Polyurethankunststoffe mit wesentlich verbesserten mechanischen Eigenschaften.

Bei der Herstellung der NCO-Vorpolymerisate können gegebenenfalls auch niedermolekulare Polyole mit einem Molekulargewicht von weniger als etwa 300 mitverwendet werden, wie sie als Kettenverlängerungsmittel an sich bekannt sind. Bevorzugt sind in diesem Zusammenhang Ethandiol, Butandiol-1,4 und Trimethylolpropan. In Frage kommen außerdem beispielsweise noch Propandiol-1,3 und -1,2, Butandiol-1,3, -1,4 und -2,3, Pentandiol-1,5, Hexandiol-1,6, Bishydroxyethylhydrochinon, Glycerin und N-Methylhydroxyethylamin.

Der Polyether zur Herstellung des hydrophilen Prepolymers ist vorzugsweise ein Ethylenoxidhomo- oder -copolymerisat, wobei als Copolymerisatbestandteile die üblichen Polyetherbausteine, z.B. Propylenoxid (POX), Butylenoxid, Tetrahydrofuran oder Styroloxid in Frage kommen. Die Polymerisation kann in Gegenwart von Katalysatoren, z.B. Bortrifluorid, oder durch Anlagerung an die obengenannten Startkomponenten mit reaktiven Wasserstoffatomen erfolgen.

Besonders bevorzugt eingesetzt werden EOX-POX-Polyether und EOX-Tetramethylenoxid-Polyether. Die hydrophilen Polyether haben vorzugsweise Molgewichte von 500 bis 5000, besonders bevorzugt 1000 bis 2500 und sind linear oder verzweigt.

Die Herstellung der NCO-Vorpolymerisate erfolgt in an sich bekannter Weise, indem man höhermolekulare Polyhydroxylverbindungen und gegebenenfalls Kettenverlängerer mit überschüssigem Polyisocyanat in geeigneter Weise zur Reaktion bringt. Man wählt dabei ein NCO/OH-Verhältnis vorzugssweise von 1,2 bis 6,0, besonders bevorzugt von 1,6 bis 3,0.

Bei dem ketiminhaltigen Härtergemisch handelt es sich vorzugsweise um ein Gemisch aus den Verbindungen der Formeln

$H_2N\text{-}R\text{-}NH_2$ (A)

$H_2N\text{-}R\text{-}N = R_1$ (B)

und

$R_1 = N\text{-}R\text{-}N = R_1$ (C)

in welchen

R für einen divalenten aliphatischen, cycloaliphatischen oder araliphatischen Rest mit 2 bis 18 C-Atomen steht, der auch noch die Gruppierung -O-oder

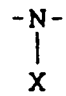

($X = H, -CH_3, -C_2H_5, -C_3H_7, -C_4H_9$)
enthalten kann und

$R_1$ einen aliphatischen oder cycloaliphatischen Rest bedeutet, wie er durch Entfernung des Sauerstoffs aus einem Keton oder Aldehyd mit 2 bis 8, vorzugsweise 3 bis 6, C-Atomen entsteht,

wobei die Molverhältnisse

$$\frac{A}{B + C} = 1:20 \text{ bis } 1:3, \text{ vorzugsweise } 1:10 \text{ bis } 1:5,$$

$$\frac{B}{C} = 1:2 \text{ bis } 2:1, \text{ vorzugsweise } 1:1,5 \text{ bis } 1,5:1,$$

sowie

$$\frac{A + B + C}{H_2O} = 1:1,4 \text{ bis } 1:20, \text{ vorzugsweise } 1:1,4 \text{ bis } 1:10$$

einzuhalten sind.

Die erfindungsgemäß einzusetzenden Härtergemische basieren auf Polyaminen, die mindestens 2 aliphatisch gebundene $NH_2$-Gruppen enthalten. Solche Amine sind beispielsweise Ethylendiamin, Trimethylendiamin, Tetramethylendiamin, Hexamethylendiamin, Propylendiamin, das Isomerengemisch von 2,2,4- und 2,4,4-Trimethylhexamethylendiamin, 1,3- und 1,4-Xylylendiamin, Bis-(2-aminoethyl)-amin und Methylbis-(3-aminopropyl)-amin.

Erfindungsgemäß bevorzugt sind cycloaliphatische Diamine. Beispielsweise seien hier die folgenden Verbindungen genannt:

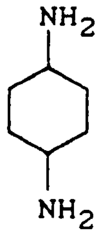
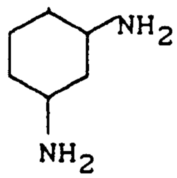
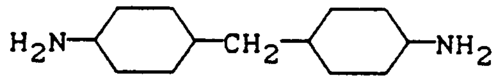

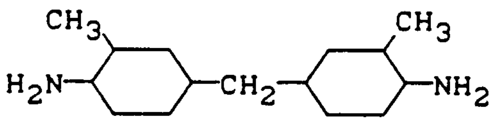
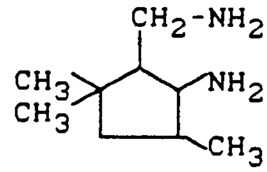

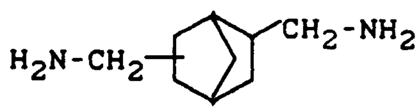
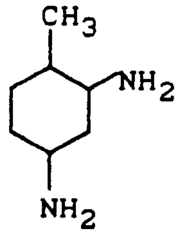
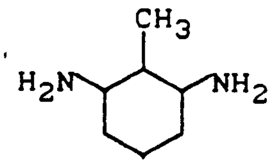

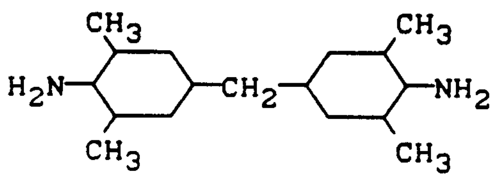
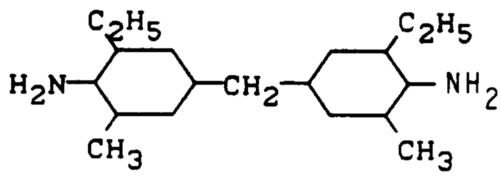

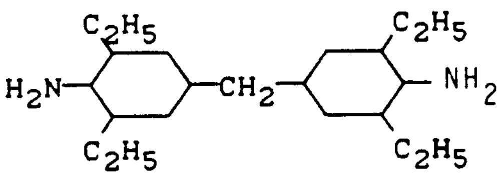
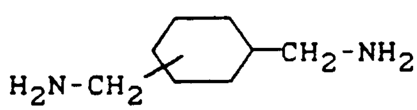

besonders bevorzugt ist

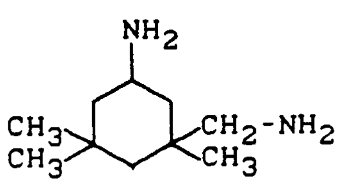

Im erfindungsgemäßen Verfahren werden nicht die reinen Amine sondern Gemische dieser Amine mit den entsprechenden Aldiminen bzw. Ketiminen und Wasser eingesetzt. Die Herstellung dieser Gemische erfolgt z.B. auf folgendem Wege:
In an sich bekannter Weise werden aus Diaminen und überschüssigem Keton bzw. Aldehyd durch Erhitzen das Bisketimin bzw. das Bisaldimin hergestellt, die als reine Substanzen isoliert werden können. Zu diesen Bisketiminen bzw. Bisaldiminen gibt man nur Wasser und gegebenenfalls freies Diamin hinzu, wobei die benötigte Wassermenge erfindungsgemäß größer ist als die Menge die für die vollständige hydrolytische

Spaltung der vorhandenen Ketimin- bzw. Aldimin-Gruppen gebraucht wird. Durch Erhitzen kann man dann den gewünschten Hydrolysegrad einstellen. Die Wassermenge kann innerhalb der beanspruchten Grenzen zo variiert werden, daß die Reaktivität des Härtergemisches bei den gegebenen Aushärtungsbedingungen der Reaktivität des NCO-Vorpolymerisats voll angepaßt werden kann. Im Härtergemisch sollen zum Zeitpunkt der Aushärtung in dem erfindungsgemäß beanspruchten Verhältnis das freie Diamin, das mit einem Molekül Keton oder Aldehyd blockierte Diamin und das an beiden Aminogruppen blockierte Diamin vorliegen. Überraschend ist besonders, daß trotz Wasserüberschuß der größte Teil der Aminogruppen bei Raumtemperatur blockiert bleibt und nur eine verhältnismäßig kleine Menge als freies Diamin vorliegt. Die Zusammensetzung des Härtergemisches läßt sich durch verschiedene Analysenmethoden (z.B. durch Gaschromatographie) einfach ermitteln.

Das erfindungsgemäß einzusetzende Härtergemisch läßt sich aber auch herstellen, ohne daß das Bisketimin bzw. das Bisaldimin isoliert wird. Man erhitzt beispielsweise das Diamin mit dem Keton und/oder dem Aldehyd bis zum Sieden und kocht am Rückfluß, ohne das dabei freiwerdende Wasser abzutrennen. Man erhält dadurch ein Gemisch von Diamin, teilblockiertem Diamin und Bisketimin bzw. Bisaldimin, das wegen des zu geringen Wassergehaltes allerdings nicht für das erfindungsgemäße Verfahren geeignet ist. Erst nach Zugabe von weiterem Wasser erhält man ein geeignetes Härtergemisch, bei welchem das Mengenverhältnis der Komponenten innerhalb der beanspruchten Grenzen liegt.

Erfindungsgemäß einzusetzende Aldehyde bzw. Ketone sind solche mit 2 bis 8, vorzugsweise 3 bis 6, C-Atomen. Beispielhaft genannt seien Acetaldehyd, Propionaldeyd, Butyraldehyd, Isobutyraldehyd, Aceton, Methylethylketon, Methylisobutylketon, Diisopropylketon, Cyclopentanon und Cyclohexanon.

Die Umsetzung der NCO-Prepolymeren mit dem ketiminhaltigen Härtergemisch erfolgt in Anwesenheit von organischen Lösungsmitteln. Vorzugsweise ist der Anteil des Lösungsmittels im Reaktionsgemisch kleiner als 50 Gew.-%, besonders bevorzugt kleiner als 40 Gew.-%. Lösungsmittel werden vor allem im Härtergemisch oft deshalb mitverwendet, um die Dosierung zu vereinfachen. Als Lösungsmittel sowohl für das NCO-Vorpolymerisat als auch für das Härtergemisch kommen z.B. in Frage: Kohlenwasserstoffe wie Toluol oder Xylol; Ester wie Ethylglykolacetat, Ethylacetat und Methoxypropylacetat; Ketone wie Aceton, Methylethylketon, Methylisobutylketon und Cyclohexanon. Auch andere übliche Lösungsmittel wie Dimethylformamid können verwendet werden.

Erfindungsgemäß bevorzugt sind jedoch nichttoxische, wenig polare Lösungsmittel. Die Reaktion des Isocyanatgruppen enthaltenden Vorpolymeren mit dem Härtergemisch findet im allgemeinen bei Temperaturen von 10 bis 100 ° C, vorzugsweise 50 bis 80 ° C statt.

Die als Härter bzw. Kettenverlängerungsmittel dienenden ketiminhaltigen Gemische bzw. Zubereitungen sind z.B. aus der DE-OS 2 637 115 bekannt.

Gemäß der vorliegenden Erfindung werden vorzugsweise 40 bis 60 % der in den NCO-Prepolymeren enthaltenen NCO-Gruppen mit den reaktiven Gruppen des Härtergemischs b) umgesetzt. Die verbleibenden NCO-Gruppen reagieren mit dem zugefügten Wasser und gegebenenfalls anderen zugesetzten Komponenten, z.B. kleinen Mengen Alkohol wie Methanol oder Ethanol.

Charakteristische Vertreter der erfindungsgemäßen Polyurethanharnstoffe sind solche, die unter Verwendung eines Gemischs aus hydrophilen und hydrophoben NCO-Prepolymeren, bei dem der Anteil des hydrophilen NCO-Prepolymers etwa 70 Gew.-% beträgt, das hydrophile NCO-Prepolymer ein Polyether-NCO-Prepolymer mit einem EOX-Anteil im Polyether von etwa 46 Gew.-% ist und die Umsetzung des NCO-Prepolymergemischs mit dem Härtergemisch zu etwa 50 % erfolgt, hergestellt worden sind.

Bei der Herstellung der erfindungsgemäßen Polyurethanharnstoffe können, insbesondere auch im Hinblick auf ihre Verwendung als Beschichtungsmittel, an sich bekannte Hilfsmittel und Zusatzmittel, wie Verlaufmittel, Stabilisierungsmittel, Katalysatoren und Pigmente und/oder deren Zubereitungen mitverwendet werden.

Die Erfindung betrifft weiterhin ein Verfahren zur Herstellung von Polyurethanharnstoffen auf die oben beschriebene Weise zur Beschichtung von Substraten.

Das erfindungsgemäße Verfahren kann zur Herstellung von Beschichtungen auf Textil, Leder, geschäumten und kompakten Kunststoffen sowie zur Lackierung von Papier, Holz, Metall und anderen Flächengebilden Verwendung finden, wobei sowohl im Direktverfahren als auch nach dem Umkehrverfahren (über Trennfolien, Trennläufer, Trennpapiere oder Matrizen als Zwischenträger) gearbeitet werden kann.

Bevorzugt dient das erfindungsgemäße Verfahren zur Beschichtung von Flächengebilden aus Textil oder Leder.

Beschichtungen auf Leder, z.B. Spaltleder, oder textilen Substraten mittels der aus den hydrophilen NCO-Prepolymeren oder Prepolymergemischen in Gegenwart von Wasser durch Umsetzung mit Aminogruppen enthaltenden Ketimin-Gemischen hergestellten erfindungsgemäßen Polyurethanharnstoffen zeichnen sich durch eine Reihe von Vorteilen gegenüber dem Stand der Technik aus.

Die durch die unterschüssige Verwendung von Aminogruppen enthaltenden Härterzubereitungen verbleibenden NCO-Gruppen reagieren mit Wasser unter $CO_2$-Abspaltung und Schaumbildung. So erreicht die Beschichtung besonders Weichheit, Geschmeidigkeit und Fülle. Weiterhin wird hierdurch die Abdeckung von Unebenheiten des Substrates, insbesondere die recht unterschiedliche Oberfläche von Spaltledern, wesentlich vergleichmäßigt. Es ist ebenfalls eine Besonderheit dieses Systems, daß es niemals zu einer Überdosierung von Aminen kommen kann und deshalb die damit verbundenen Nachteile für das Echtheitsniveau von vorneherein ausgeschlossen bzw. vermieden werden können.

Überraschend ist die erhebliche Verbesserung der Hydrolysebeständigkeit der Beschichtungen, obwohl durch die in das System in Gestalt der Polyethylenoxide (EOX) eingebrachte Hydrophilie der Wassereintritt in die Schicht begünstigt wird.

Ein weiterer Vorteil ist die durch die hydrophilen Prepolymeren im System hervorgerufene gesteigerte Wasserdampfdurchlässigkeit.

In den folgenden Beispiele wird das erfindungsgemäße Verfahren erläutert aber nicht begrenzt. Wenn nicht anders vermerkt, sind Zahlenangaben als Gewichtsteile bzw. Gewichtsprozente zu verstehen.

## Beispiele

### Herstellung der Prepolymeren:

#### Prepolymer I (Herstellung gemäß DE-OS 3 011 711, Prepolymer I)

6000 g eines Polyesters aus Adipinsäure und einem Gemisch aus Hexandiol-1,6 und Neopentylglykol im molaren Verhältnis der Diole von 11:6 (OHZ 66, Molgew. 1700) werden im Vakuum bei 80 bis 90° C entwässert. Danach setzt man 1290 g Toluylendiisocyanat (80 % 2,4-Isomeres) zu und läßt unter Rühren 30 Minuten bei 90° C reagieren. Nun werden (vgl. DE-OS 3 011 711) 320 g eines Mischtrimerisats aus 3 Mol 2,4-Toluylendiisocyanat und 2 Mol 1,6-Hexamethylendiisocyanat zugefügt (5 Mol-%, berechnet auf gesamte Isocyanatkomponente), das Reaktionsgemisch 30 Minuten bei 90° C nachreagieren gelassen, auf 60° C abgekühlt und mit 1900 g Ethylacetat auf 80 % verdünnt. NCO-Gehalt: 3,45 Gew.-%; NCO/OH = 2:1. NCO-Äquivalentgewicht 1217 g.

#### Prepolymer II

3450 g des in Prepolymer I genannten Polyesters und 3000 g eines Polyethers, der OHZ 56, Molgew. 2000, aus 50 Gew.-% Ethylenoxid und 50 Gew.-% Propylenoxid (gestartet auf 1,2-Propylenglykol) werden nach dem Entwässern wie unter Prepolymer I mit 1290 g Toluylendiisocyanat umgesetzt. Weiterhin wird mit 320 g des in Prepolymer I beschriebenen Mischtrimerisats analog Prepolymer I umgesetzt. Das erhaltene NCO-Prepolymer wird mit 2015 g Toluol auf 80 % Feststoff verdünnt. NCO-Gehalt: 3,26 %, NCO-Äquivalentgewicht 1288 g.

#### Prepolymer III

1000 g eines linearen Polyethers aus 50 Gew.-% Ethylenoxid in 50 Gew.-% Propylenoxid (gestartet auf 1,2-Propylenglykol) mit der OHZ 56 und 1000 g eines trifunktionellen Polyethers aus 27,5 Gew.-% Propylenoxid und 72,5 Gew.-% Ethylenoxid (gestartet auf Glycerin) mit der OHZ 36 werden nach dem Entwässern mit 666 g 4,4′-Diphenylmethandiisocyanat bei 90° C umgesetzt. Reaktionszeit 45 Min. NCO-Gehalt: 5,8 %, NCO-Äquivalentgewicht 724 g.

#### Prepolymer IV

1000 g eines linearen Polyethers aus 100 Gew.-% Ethylenoxid (gestartet auf Diethylenglykol) mit der OHZ 56 und 1000 g des in Prepolymer III beschriebenen trifunktionellen Polyethers der OHZ 36 wurden nach dem Entwässern mit 464 g Toluylendiisocyanat (80 % 2,4-Isomer) bei 90° C umgesetzt und mit 435 g Toluol auf 85 % Feststoffgehalt verdünnt. NCO-Gehalt: 5,33 %, NCO-Äquivalentgewicht 788 g.

#### Prepolymer V

1000 g Dihydroxytetramethylenglykolpolyether, OHZ 56, und 1000 g des in Prepolymer III beschriebenen trifunktionellen Polyethers der OHZ 36 werden nach dem Entwässern mit 666 g 4,4′-Diphenylmethandiisocyanat bei 90 °C umgesetzt, Reaktionszeit 45 min. Das NCO-Prepolymer wird mit 665 g, Methylethylketon auf 80 % Feststoff verdünnt. NCO-Gehalt: 4,64 %, NCO-Äquivalentgewicht 905 g.

Härtergemisch:

Eine Mischung aus 170 g 3,3,5-Trimethyl-5-aminomethylcyclohexylamin (IPDA), 13 g Wasser und 417 g Methylethylketon wird 2 Stunden unter Rückfluß gekocht. Nach dem Abkühlen ist die Mischung als Härter gebrauchsfertig.

Von den 170 g (1 Mol) eingesetztem IPDA liegen in der Mischung vor:

A) 12,9 Mol-% als freies IPDA

B) 41,6 Mol-% als

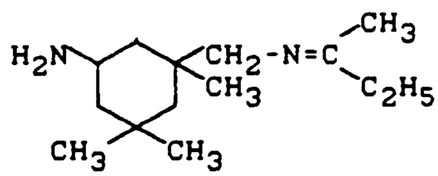

C) 45,5 Mol-% als Bis-methylethylketon-ketimin von IPDA.

(Die Zusammensetzung wurde aus der gaschromatographischen Analyse der Mischung errechnet).

In der Mischung sind insgesamt 37,9 g Wasser enthalten, die sich aus der Summe des Reaktionswassers und der zusätzlichen eingesetzten Menge von 13 g errechnen sowie 120 g eines Prepolymers hergestellt aus Toluylendiisocyanat und einem auf Propylenglykol gestarteten Propylenoxidpolyether der OHZ 56, Molgew. 2000. (Die theoretisch benötigte Menge Wasser für die hydrolytische Aufspaltung der Ketimingruppen zu Aminogruppen beträgt 24,9 g).

Das $NH_2$-Äquivalent der Härtermischung beträgt 600 g.

Beispiel 1

Spaltleder wird nach dem Umkehrverfahren mittels einer Zweikomponenten PUR-Pistolenspritzmaschine beschichtet. Die Pistolenspritzmaschine weist als Hauptbestandteile einen beheizbaren Vorratsbehälter für das Prepolymer, einen Vorratsbehälter für die Härterzubereitung, jeweils eine Dosiervorrichtung für Härterzubereitung und Prepolymerisat und zum Mischen und Versprühen der Komponenten eine Zweikomponenten-PU-Spritzpistole wie in der DE-OS 2 746 188 (US-PS 4310493 beschrieben, eine beheizbare Zuführung für das Prepolymer, eine Zuführung für den Härter, eine Leitung für Lösemittel und eine Zuführung für Preßluft auf.

Von Prepolymer I werden 150 g und von Prepolymer III 350 g in den beheizbaren Vorratsbehälter gegeben und zwecks Erniedrigung seiner Viskosität auf 50 °C - 80 °C erwärmt. Die Härterzubereitung wird zusammen mit zum Beispiel 10 Gew.-% Pigmentzubereitung (Anpastung von 60 Gew.-% $TiO_2$, 27 Gew.-% Polyacrylat und 13 Gew.-% Cyclohexanon) pro Härteräquivalent in den für sie bestimmten Behälter gegeben. Durch das Zufügen der Pigmentzubereitung erhöht sich das $NH_2$-Äquivalent der Härtermischung auf 660 g.

Über getrennte Leitungen mit dazwischenliegenden Dosiervorrichtungen werden Prepolymer und 199,5 g Härterzubereitung entsprechend 50 % der berechneten Aminmenge in die Pistole gefördert. Die geförderten Mengen von Prepolymer I und Härterzubereitung bewegen sich im Verhältnis der Äquivalentgewichte von NCO : $NH_2$ von 1,00 : 1 bis 2,0 : 1. Der $NH_2$-Anteil kann anteilig durch $H_2O$ ersetzt werden. Der Gesamtmengendurchsatz ist variierbar und richtet sich nach der gewünschten Schichtstärke und nach der Fläche, die in der Zeiteinheit beschichtet wird. Die Bestandteile der Reaktionsmischung werden im Mischraum und im Mischrohr der Zweikomponenten-PU-Spritzpistole - wie in der DE-OS 2 746 188 (US-PS 4310493) eingehend beschrieben - in kürzester Zeit intensiv vermischt und mittels Pressluft durch die Austrittsdüse gedrückt. Die Reaktion der Komponenten setzt sofort, d. h. bereits während des Mischvorganges, ein.

Am Austritt der Pistole wird die Mischung zusätzlich durch mit Preßluft (Betriebsdruck 3 - 6 $kg/cm^2$) erzeugte Luftwirbel vermischt und die Kegelform des Spritzstrahles in einen Breitstrahl umgewandelt. Die Pistole wird bei der Abgabe der Produktmischung mit Hilfe eines Schlittens in einer Breite von 150 cm ca.

25 - 35 mal pro Minute hin und her bewegt. Unter der Pistole läßt man eine mit Silikonkautschuk beschichtete Matrize, die den Abdruck im Negativ von natürlichem Leder trägt oder auch einen anderen Trennträger mit einer Geschwindigkeit von 2 - 10 Meter/Minute durchlaufen. Die auf die Matrize oder den Trennträger gesprühte Masse verläuft filmartig, die Viskosität steigt sofort an und etwa 30 - 90 sec., vom Zeitpunkt des Aufsprühens an gerechnet, ist ein pastiger Zustand erreicht. Auf bzw. in die reagierende Masse wird das zu beschichtende Spaltleder oder gegebenenfalls andere Substrate gelegt und angedrückt. Die gesamte Beschichtung passiert anschließend einen auf 60 - 120 ° C geheizten Trockenkanal. Nach etwa 6 - 3 Minuten, vom Zeitpunkt des Aufsprühens an gerechnet, kann die Beschichtung klebfrei von der Matrize bzw. vom Trennträger abgezogen werden.

Die Polyurethanharnstoff-Schicht hat im Regelfall eine Stärke von 0,15 - 0,45 mm.

Das beschichtete Spaltleder weist eine natürlichem Leder täuschend ähnliche Narbung auf, ist nach kurzer Zeit stapelbar und dann zum Beispiel auf gängigen Schuhmaschinen verarbeitbar. Die Haftung zwischen Beschichtung und Spaltleder ist ausgezeichnet, der Griff angenehm trocken, weich und füllig. Die Abdeckung der Unebenheiten des Spaltleders ist hervorragend; die Hydrolysebeständigkeit der PU-Schicht geht weit über den Stand der Technik hinaus. Die Wasserdampfdurchlässigkeit nach DIN 53333 beträgt 0,5 - 10 mg/cm$^2$ h. Die beschichteten Leder überstehen den Flexometertest

1. trocken mit über 100.000 Knickungen ohne Beschädigung
2. naß mit über 100.000 Knickungen ohne Beschädigung
3. bei -25 ° C mit weit mehr als 10.000 Knickungen ohne Beschädigung.

Der Heißbügeltest bei 150 ° C verläuft ohne sichtbare Beschädigung.

Die Haftfestigkeit der Beschichtung am Substrat ist höher als die innere Festigkeit der Beschichtung, d. h. die Adhesion am Substrat übersteigt die Kohäsion der Beschichtungsmasse. Die Filmfestigkeit beträgt 12 Mpa.

## Beispiel 2

500 g Prepolymer II und 128 g der wie in Beispiel 1 eine Pigmentpräparation enthaltenden Härterzubereitung werden wie in Beispiel 1 umgesetzt und verarbeitet. Die Härtermenge beträgt 50 % der berechneten Menge bezogen auf NCO-Gruppen im Prepolymer. Die verbleibenden NCO-Gruppen reagieren mit Wasser unter $CO_2$-Abspaltung. Auch diese beschichteten Spaltleder haben einen angenehmen Griff, zeigen gute Narbenabbildung, sind jedoch infolge des höheren Anteils von $H_2O$ im Härter und des geringeren Anteils von Amin im Vernetzer noch fülliger als die Vergleiche in Beispiel 1. Die Flexometerwerte werden wie unter 1 angegeben ebenfalls erreicht.

## Beispiel 3

500 g Prepolymer IV und 293 g pigmenthaltiger Härterzubereitung wie in Beispiel 1 werden, wie in Beispiel 1 beschrieben, vermischt und weiterverarbeitet. Die Härtermenge beträgt 70 % der berechneten Menge, bezogen auf den NCO-Gehalt des eingesetzten Prepolymers. Die Beschichtung ist weicher als die Vergleiche von Beispiel 1. Außerdem ist infolge des hohen NCO-Gehaltes ein sehr hoher $CO_2$ Ausstoß verantwortlich für eine wesentlich schaumigere Beschichtung als unter Beispiel 1.

## Beispiel 4

500 g Prepolymer V und 166 g pigmenthaltiger Härterzubereitung (s. Beispiel 1) werden wie in Beispiel 1 beschrieben vermischt, auf eine Matrize mit einer genarbten Oberfläche gespritzt. In die Reaktionsmischung wird Polyester-Baumwollgewebe von ca. 200 g/m$^2$ Warengewicht kaschiert. Die Härtermenge reicht für die Vernetzung von 30 % der NCO-Gruppen im Prepolymeren. Die übrigen 70 % der NCO-Gruppen reagieren mit Wasser. Man erhält ein Textil, das mit einer PU-Beschichtung versehen ist, die ihm ein lederähnliches Aussehen verleiht, von angenehmen und vollem Griff. Die Flexometerwerte entsprechend den Werten aus Beispiel 1, ebenso die Wasserdampfdurchlässigkeitswerte, die in dieser Höhe bei gleich guten mechanisch/physikalischen Echtheiten nicht zu erwarten sind.

## Beispiel 5

Auf einen Endlostrennträger wird in einem 1. Auftrag eine Mischung des Prepolymeren aus Beispiel 1 mit der theoretischen Menge einer Härterzubereitung wie unter "Härtergemisch" auf Seite 6 der DE-OS 2 637 115 angegeben mit einem Gehalt von 15 % einer Pigmentzubereitung ($TiO_2$-Anpastung in Polyacrylat

und Cyclohexanon), bezogen auf Härterzubereitung, umgesetzt, in der Weise, daß das NCO : $NH_2$-Verhältnis 1,08 : 1 beträgt und dann die Auftragsmenge 150 g NCO-Prepolymere pro $m^2$ beträgt. Das verwendete Prepolymer hat einen NCO-Gehalt von 3,4 % und daraus ergibt sich die Rezeptur:

| | |
|---|---|
| 100 g | Prepolymer und |
| 53,5 g | der pigmenthaltigen Härterzubereitung und daraus als Fördermenge für eine Arbeitsgeschwindigkeit von 3 m/min bei einer Spritzbreite von 1,50 m |
| 675 g/min | Prepolymer und |
| 361 g/min | Härterzubereitung. |

Als 2. Auftrag, der auf den 1. Auftrag erfolgt und der die Funktion eines Haftstriches übernimmt, wird eine Mischung gemäß Beispiel 1 in einer Menge von 150 g Auflage/$m^2$, bezogen auf Prepolymermenge aufgespritzt.

In die reagierende Mischung des 2. Auftrages wird ein Rindsspaltleder einkaschiert und wie unter Beispiel 1 angegeben weiterverfahren. Nach beendeter Reaktion wird der beschichtete Spalt von dem Trennpapier abgenommen. Man erhält eine Beschichtung, die den Narben des Trennträgers, ohne Poren oder Löcher in der Oberfläche, wiedergibt. Der Griff des beschichteten Spaltes ist angenehm, füllig und hat einen feinen Narbenwurf.

Die Haftung der Beschichtung am Spalt ist ausgezeichnet, die Wasserdampfdurchlässigkeit ist erwartungsgemäß deutlich niedriger als in Beispiel 1 angegeben, dafür ist jedoch die Kratzfestigkeit im Vergleich zu Beschichtungen gemäß Beispiel 1 deutlich erhöht.

Beispiel 6

500 g Prepolymer III werden mit 217 g Härterzubereitung aus Beispiel 1 auf einen endlos Trennträger gespritzt. Die Härtermenge beträgt 60 % bezogen auf NCO-Gruppen. Die Beschichtung auf Spaltleder ist weich, füllig und außergewöhnlich gut wasserdampfdurchlässig, ähnlich wie zugerichtetes Narbenleder.

Beispiel 7

Wie Beispiel 5, nur wird anstelle des Spaltleders ein tief angeschliffenes, stark narbengeschädigtes Narbenleder auf der Narbenseite beschichtet. Die Schädigung des Ausgangsmaterials ist so schwer, daß dieses Leder, u.a. wegen Brandzeichen mit üblichen Methoden nicht zu einem vollwertig verwertbaren Material aufgearbeitet werden kann. Überraschend ist das Abdeckvermögen der Beschichtung, die sogar in der Lage ist, Brandzeichen fast völlig zu kaschieren. Die Haftung der Beschichtung am Narbenleder ist sehr gut, da ein tiefgeschliffenes - also einem Nubuk entsprechendes - Material beschichtet wurde. Die Geschmeidigkeit des beschichteten Leders ist höher, weil das Ledersubstrat diesen Effekt im vorliegenden Beispiel besonders günstig beeinflußt.

Beispiel 8

Wie Beispiel 7, nur daß im Laborhandversuch im Haftstrich die Härterzubereitung völlig durch Wasser ersetzt wird. Die Reaktion ist so langsam, daß ein Zukaschieren zu dem betriebsmäßig erforderlichen Zeitpunkt nicht möglich ist. Auch durch chemische Katalyse ist die Reaktion nicht so zu beschleunigen, daß eine Übertragung auf eine Produktionsanlage möglich ist. Eine Schaumbildung ist nicht zu erreichen, da der Schaum nach Entstehung in sich ungeregelt zusammenfällt.

Beispiel 9

Wie Beispiel 7, nur daß auch im Haftstrich die Dosierung bezogen auf den NCO-Gehalt auf die Reaktion $NCO/NH_2$ = 1,08:1 eingestellt wird und eine Zudosierung von Wasser unterbleibt. Die Reaktion ist so schnell, daß ein Zukaschieren nicht mehr möglich ist, weil keine ausreichende Haftung mehr erzielbar ist. Außerdem kommt es wegen der viel zu schnellen Reaktion auch zu keiner echten Filmbildung, denn die Reaktionsmischung trifft bereits zum großen Teil in Form kleiner Fladen auf dem Trennträger auf, die nicht mehr "verlaufen" können (Rotzen), aber trotzdem anteilig als inhomogener Schaum anzusprechen sind.

**Patentansprüche**

**Patentansprüche für folgende Vertragsstaaten : AT, BE, DE, FR, GB, IT, NL**

**1.** Polyurethanharnstoffe, erhältlich durch Umsetzung

a) eines hydrophilen NCO-Prepolymers, das unter Verwendung einer Polyhydroxykomponente hergestellt worden ist, die 9 bis 100 Gew.-% eines Polyethers mit 40 bis 80 Gew.-% Ethylenoxidanteil enthält, mit

b) einem Gemisch von Verbindungen der Formeln

$H_2N\text{-}R\text{-}NH_2$ (A)
$H_2N\text{-}R\text{-}N = R^1$ (B)
und
$R^1 = N\text{-}R\text{-}N = R^1$ (C)

worin

R für einen divalenten aliphatischen, cycloaliphatischen oder araliphatischen Rest mit 2 bis 18 C-Atomen steht, der auch noch die Gruppierungen -O- oder

$$\begin{array}{c}-N-\\ |\\ X\end{array}$$

($X = H, -CH_3, -C_2H_5, -C_3H_7, -C_4H_9$)
enthalten kann und

$R^1$ einen aliphatischen oder cycloaliphatischen Rest bedeutet, wie er durch Entfernung des Sauerstoffs aus einem Keton oder Aldehyd mit 2 bis 8, vorzugsweise 3 bis 6, C-Atomen entsteht,

wobei die Molverhältnisse

$$\frac{A}{B + C} = 1:20 \text{ bis } 1:3,$$

$$\frac{B}{C} = 1:2 \text{ bis } 2:1, \text{ sowie}$$

$$\frac{A + B + C}{H_2O} = 1:1,4 \text{ bis } 1:20$$

betragen, als Härter
in Gegenwart von Wasser und organischen Lösungsmitteln derart, daß 30 bis 70 % der NCO-Gruppen mit den reaktiven Gruppen des Härtergemischs b) und die verbleibenden NCO-Gruppen mit dem Wasser und gegebenenfalls anderen zugesetzten Komponenten reagieren.

**2.** Polyurethanharnstoffe, erhältlich durch Umsetzung

a) eines Prepolymers, bestehend aus einem Gemisch aus

A) einem hydrophilen NCO-Prepolymer, das unter Verwendung einer Polyhydroxykomponente hergestellt worden ist, die 40 bis 80 Gew.-% Ethylenoxidanteil enthält, und

B) einem hydrophoben NCO-Prepolymer, wobei dieses Gemisch $\leqq$ 30 Gew.-% des hydrophilen Prepolymers umfaßt, mit

b) einem Gemisch von Verbindungen der Formeln

$H_2N\text{-}R\text{-}NH_2$ (A)
$H_2N\text{-}R\text{-}N = R^1$ (B)

und
$R^1 = N\text{-}R\text{-}N = R^1$ (C)

worin

R für einen divalenten aliphatischen, cycloaliphatischen oder araliphatischen Rest mit 2 bis 18 C-Atomen steht, der auch noch die Gruppierungen -O- oder

$$-\underset{\underset{X}{|}}{N}-$$

($X = H, -CH_3, -C_2H_5, -C_3H_7, -C_4H_9$)
enthalten kann und

$R^1$ einen aliphatischen oder cycloaliphatischen Rest bedeutet, wie er durch Entfernung des Sauerstoffs aus einem Keton oder Aldehyd mit 2 bis 8, vorzugsweise 3 bis 6, C-Atomen entsteht,

wobei die Molverhältnisse

$$\frac{A}{B + C} = 1:20 \text{ bis } 1:3,$$

$$\frac{B}{C} = 1:2 \text{ bis } 2:1, \text{ sowie}$$

$$\frac{A + B + C}{H_2O} = 1:1{,}4 \text{ bis } 1:20$$

betragen, als Härter
in Gegenwart von Wasser und organischen Lösungsmitteln derart, daß 30 bis 70 % der NCO-Gruppen mit den reaktiven Gruppen des Härtergemischs b) und die verbleibenden NCO-Gruppen mit dem Wasser und gegebenenfalls anderen zugesetzten Komponenten reagieren.

**3.** Polyurethanharnstoffe gemäß den Ansprüchen 1 und 2, die dadurch erhältlich sind, daß man eine Polyhydroxykomponente einsetzt, die 16 bis 64 Gew.-% eines Polyethers mit 40 bis 80 Gew.-% Ethylenoxidanteil einsetzt.

**4.** Polyurethanharnstoffe gemäß den Ansprüchen 2 und 3, die dadurch gekennzeichnet sind, daß das eingesetzte Prepolymergemisch 40 bis 80 Gew.-% des hydrophilen NCO-Prepolymers enthält.

**5.** Polyurethanharnstoffe gemäß den Ansprüchen 1 bis 4, die dadurch erhältlich sind, daß man 40 bis 60 % der NCO-Gruppen der NCO-Prepolymeren umsetzt.

**6.** Polyurethanharnstoffe gemäß den Ansprüchen 1 bis 5, die dadurch gekennzeichnet sind, daß man als hydrophile Polyether Ethylenoxid/Propylenoxid-Polyether oder Ethylenoxid/Tetramethylenoxid-Polyether einsetzt.

**7.** Verfahren zur Beschichtung von Substraten unter Verwendung von Polyurethanharnstoffen gemäß den Ansprüchen 1 bis 6.

**8.** Verfahren zur Beschichtung von Flächengebilden aus Textil oder Leder unter Verwendung von

Polyurethanharnstoffen gemäß den Ansprüchen 1 bis 6.

**9.** Verfahren nach Anspruch 8 zur Beschichtung nach dem Umkehrverfahren.

**10.** Mit den Polyurethanharnstoffen gemäß den Ansprüchen 1 bis 6 beschichtete Substrate, insbesondere Flächengebilde aus Textil oder Leder.

**Patentansprüche für folgenden Vertragsstaat : ES**

**1.** Verfahren zur Herstellung von Polyurethanharnstoffen durch Umsetzung
a) eines hydrophilen NCO-Prepolymers, das unter Verwendung einer Polyhydroxykomponente hergestellt worden ist, die 9 bis 100 Gew.-% eines Polyethers mit 40 bis 80 Gew.-% Ethylenoxidanteil enthält, mit
b) einem Gemisch von Verbindungen der Formeln

$H_2N\text{-}R\text{-}NH_2$ (A)
$H_2N\text{-}R\text{-}N = R^1$ (B)
und
$R^1 = N\text{-}R\text{-}N = R^1$ (C)

worin
R für einen divalenten aliphatischen, cycloaliphatischen oder araliphatischen Rest mit 2 bis 18 C-Atomen steht, der auch noch die Gruppierungen -O- oder

$$\begin{array}{c}-N-\\ |\\ X\end{array}$$

($X = H, -CH_3, -C_2H_5, -C_3H_7, -C_4H_9$)
enthalten kann und
$R^1$ einen aliphatischen oder cycloaliphatischen Rest bedeutet, wie er durch Entfernung des Sauerstoffs aus einem Keton oder Aldehyd mit 2 bis 8, vorzugsweise 2 bis 6, C-Atomen entsteht,

wobei die Molverhältnisse

$$\frac{A}{B + C} = 1:20 \text{ bis } 1:3,$$

$$\frac{B}{C} = 1:2 \text{ bis } 2:1, \text{ sowie}$$

$$\frac{A + B + C}{H_2O} = 1:1{,}4 \text{ bis } 1:20$$

betragen, als Härter
in Gegenwart von Wasser und organischen Lösungsmitteln derart, daß 30 bis 70 % der NCO-Gruppen mit den reaktiven Gruppen des Härtergemischs b) und die verbleibenden NCO-Gruppen mit dem Wasser und gegebenenfalls anderen zugesetzten Komponenten reagieren.

**2.** Verfahren zur Herstellung von Polyurethanharnstoffen durch Umsetzung
a) eines Prepolymers, bestehend aus einem Gemisch aus

A) einem hydrophilen NCO-Prepolymer, das unter Verwendung einer Polyhydroxykomponente hergestellt worden ist, die 40 bis 80 Gew.-% Ethylenoxidanteil enthält, und

B) einem hydrophoben NCO-Prepolymer, wobei dieses Gemisch ≦ 30 Gew.-% des hydrophilen Prepolymers umfaßt, mit

b) einem Gemisch von Verbindungen der Formeln

$H_2N\text{-}R\text{-}NH_2$ (A)
$H_2N\text{-}R\text{-}N = R^1$ (B)
und
$R^1 = N\text{-}R\text{-}N = R^1$ (C)

worin

R für einen divalenten aliphatischen, cycloaliphatischen oder araliphatischen Rest mit 2 bis 18 C-Atomen steht, der auch noch die Gruppierungen -O- oder

$$-\underset{\substack{|\\ X}}{N}-$$

($X$ = H, $-CH_3$, $-C_2H_5$, $-C_3H_7$, $-C_4H_9$)
enthalten kann und

$R^1$ einen aliphatischen oder cycloaliphatischen Rest bedeutet, wie er durch Entfernung des Sauerstoffs aus einem Keton oder Aldehyd mit 2 bis 8, vorzugsweise 3 bis 6, C-Atomen entsteht,

wobei die Molverhältnisse

$$\frac{A}{B + C} = 1{:}20 \text{ bis } 1{:}3,$$

$$\frac{B}{C} = 1{:}2 \text{ bis } 2{:}1, \text{ sowie}$$

$$\frac{A + B + C}{H_2O} = 1{:}1{,}4 \text{ bis } 1{:}20$$

betragen, als Härter
in Gegenwart von Wasser und organischen Lösungsmitteln derart, daß 30 bis 70 % der NCO-Gruppen mit den reaktiven Gruppen des Härtergemischs b) und die verbleibenden NCO-Gruppen mit dem Wasser und gegebenenfalls anderen zugesetzten Komponenten reagieren.

**3.** Verfahren gemäß den Ansprüchen 1 und 2, wonach man eine Polyhydroxykomponente einsetzt, die 16 bis 64 Gew.-% eines Polyethers mit 40 bis 80 Gew.-% Ethylenoxidanteil einsetzt.

**4.** Verfahren gemäß den Ansprüchen 2 und 3, die dadurch gekennzeichnet sind, daß das eingesetzte Prepolymergemisch 40 bis 80 Gew.-% des hydrophilen NCO-Prepolymers enthält.

**5.** Verfahren gemäß den Ansprüchen 1 bis 4, dadurch gekennzeichnet, daß man 40 bis 60 % der NCO-Gruppen der NCO-Prepolymeren umsetzt.

6. Verfahren gemäß den Ansprüchen 1 bis 5, dadurch gekennzeichnet, daß man als hydrophile Polyether Ethylenoxid/Propylenoxid-Polyether oder Ethylenoxid/Tetramethylenoxid-Polyether einsetzt.

7. Verfahren zur Beschichtung von Substraten unter Verwendung von nach Verfahren gemäß den Ansprüchen 1 bis 6 erhältlichen Polyurethanharnstoffen.

8. Verfahren zur Beschichtung von Flächengebilden aus Textil oder Leder unter Verwendung von nach Verfahren gemäß den Ansprüchen 1 bis 6 erhältlichen Polyurethanharnstoffen.

9. Verfahren nach Anspruch 8 zur Beschichtung nach dem Umkehrverfahren.

**Claims**
**Claims for the following Contracting States : AT, BE, DE, FR, GB, IT, NL**

1. Polyurethane-ureas, obtainable by reacting
   a) a hydrophilic NCO prepolymer prepared using a polyhydroxy component containing 9 to 100% by weight of a polyether with an ethylene oxide content of 40 to 80% by weight, with
   b) a mixture of compounds of the formulae

   $H_2N\text{-}R\text{-}NH_2$ (A)
   $H_2N\text{-}R\text{-}N=R^1$ (B)
   and
   $R^1=N\text{-}R\text{-}N=R^1$ (C)

   in which
   R represents a divalent aliphatic, cycloaliphatic or araliphatic radical having 2 to 18 C atoms, which additionally can also contain the groupings -O- or

$$\begin{array}{c} -N- \\ | \\ X \end{array}$$

   ($X = H, -CH_3, -C_2H_5, -C_3H_7, -C_4H_9$)
   and
   $R^1$ represents an aliphatic or cycloaliphatic radical such as is formed by removing the oxygen from a ketone or aldehyde having 2 to 8 and preferably 3 to 6 C atoms,
   the molar ratios being

$$\frac{A}{B + C} = 1:20 \text{ to } 1:3,$$

$$\frac{B}{C} = 1:2 \text{ to } 2:1, \text{ and}$$

$$\frac{A + B + C}{H_2O} = 1:1.4 \text{ to } 1:20,$$

   as a hardener
   in the presence of water and organic solvents, in such a way that 30 to 70% of the NCO groups react with the reactive groups of the hardener mixture b) and the remaining NCO groups react with the water and other added components, if any.

**2.** Polyurethane-ureas, obtainable by reacting

a) a prepolymer consisting of a mixture of

A) a hydrophilic NCO prepolymer which has been prepared using a polyhydroxy component containing a proportion of 40 to 80% by weight of ethylene oxide and

B) a hydrophobic NCO prepolymer, this mixture comprising ≦ 30% by weight of the hydrophilic prepolymer, with

b) a mixture of compounds of the formulae

$H_2N\text{-}R\text{-}NH_2$ (A)
$H_2N\text{-}R\text{-}N=R^1$ (B)
and
$R^1=N\text{-}R\text{-}N=R^1$ (C)

in which

R represents a divalent aliphatic, cycloaliphatic or araliphatic radical having 2 to 18 C atoms, which additionally can also contain the groupings -O- or

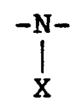

($X$ = H, $-CH_3$, $-C_2H_5$, $-C_3H_7$, $-C_4H_9$)
and

$R^1$ denotes an aliphatic or cycloaliphatic radical, such as is formed by removing the oxygen from a ketone or aldehyde having 2 to 8 and preferably 3 to 6 C atoms,

the molar ratios being

$$\frac{A}{B + C} = 1:20 \text{ to } 1:3,$$

$$\frac{B}{C} = 1:2 \text{ to } 2:1, \text{ and}$$

$$\frac{A + B + C}{H_2O} = 1:1.4 \text{ to } 1:20,$$

as hardeners

in the presence of water and organic solvents, in such a way that 30 to 70% of the NCO groups react with the reactive groups of the hardener mixture b) and the remaining NCO groups react with the water and other added components, if any.

**3.** Polyurethane-ureas according to Claims 1 and 2, which are obtainable by using a polyhydroxy component which contains 16 to 64% by weight of a polyether with a proportion of 40 to 80% by weight of ethylene oxide.

**4.** Polyurethane-ureas according to Claims 2 and 3, characterised in that the prepolymer mixture used contains 40 to 80% by weight of the hydrophilic NCO prepolymer.

**5.** Polyurethane-ureas according to Claims 1 to 4, which are obtainable by reacting 40 to 60% of the NCO groups of the NCO prepolymers.

**6.** Polyurethane-ureas according to Claims 1 to 5, characterised in that ethylene oxide/propylene oxide polyethers or ethylene oxide/tetramethylene oxide polyethers are used as the hydrophilic polyethers.

**7.** Process for coating substrates, using polyurethane-ureas according to Claims 1 to 6.

**8.** Process for coating two-dimensional structures of textiles or leather, using polyurethane-ureas according to Claims 1 to 6.

**9.** Process according to Claim 8 for coating by the reversal process.

**10.** Substrates, in particular two-dimensional structures of textiles or leather, coated with the polyurethane-ureas according to Claims 1 to 6.

**Claims for the following Contracting State : ES**

**1.** Process for the preparation of polyurethane-ureas by reacting
a) a hydrophilic NCO prepolymer prepared using a polyhydroxy component containing 9 to 100% by weight of a polyether with an ethylene oxide content of 40 to 80% by weight, with
b) a mixture of compounds of the formulae

$H_2N\text{-}R\text{-}NH_2$ (A)
$H_2N\text{-}R\text{-}N=R^1$ (B)
and
$R^1=N\text{-}R\text{-}N=R^1$ (C)

in which
R represents a divalent aliphatic, cycloaliphatic or araliphatic radical having 2 to 18 C atoms, which additionally can also contain the groupings -O- or

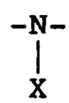

($X$ = H, $-CH_3$, $-C_2H_5$, $-C_3H_7$, $-C_4H_9$)
and
$R^1$ represents an aliphatic or cycloaliphatic radical such as is formed by removing the oxygen from a ketone or aldehyde having 2 to 8 and preferably 3 to 6 C atoms,
the molar ratios being

$$\frac{A}{B + C} = 1:20 \text{ to } 1:3,$$

$$\frac{B}{C} = 1:2 \text{ to } 2:1, \text{ and}$$

$$\frac{A + B + C}{H_2O} = 1:1.4 \text{ to } 1:20,$$

as a hardener
in the presence of water and organic solvents, in such a way that 30 to 70% of the NCO groups react with the reactive groups of the hardener mixture b) and the remaining NCO groups react with the water and other added components, if any.

**2.** Process for the preparation of polyurethane-ureas, by reacting

a) a prepolymer consisting of a mixture of

A) a hydrophilic NCO prepolymer which has been prepared using a polyhydroxy component containing a proportion of 40 to 80% by weight of ethylene oxide and

B) a hydrophobic NCO prepolymer, this mixture comprising ≦ 30% by weight of the hydrophilic prepolymer, with

b) a mixture of compounds of the formulae

$H_2N\text{-}R\text{-}NH_2$ (A)
$H_2N\text{-}R\text{-}N=R^1$ (B)
and
$R^1=N\text{-}R\text{-}N=R^1$ (C)

in which

R represents a divalent aliphatic, cycloaliphatic or araliphatic radical having 2 to 18 C atoms, which additionally can also contain the groupings -O- or

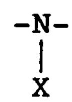

($X = H, -CH_3, -C_2H_5, -C_3H_7, -C_4H_9$)
and

$R^1$ denotes an aliphatic or cycloaliphatic radical, such as is formed by removing the oxygen from a ketone or aldehyde having 2 to 8 and preferably 3 to 6 C atoms,

the molar ratios being

$$\frac{A}{B + C} = 1:20 \text{ to } 1:3,$$

$$\frac{B}{C} = 1:2 \text{ to } 2:1, \text{ and}$$

$$\frac{A + B + C}{H_2O} = 1:1.4 \text{ to } 1:20,$$

as hardeners

in the presence of water and organic solvents, in such a way that 30 to 70% of the NCO groups react with the reactive groups of the hardener mixture b) and the remaining NCO groups react with the water and other added components, if any.

**3.** Process according to Claims 1 and 2, according to which a polyhydroxy component is used which contains 16 to 64% by weight of a polyether with a proportion of 40 to 80% by weight of ethylene oxide.

**4.** Process according to Claims 2 and 3, characterised in that the prepolymer mixture used contains 40 to 80% by weight of the hydrophilic NCO prepolymer.

**5.** Process according to Claims 1 to 4, characterised in that 40 to 60% of the NCO groups of the NCO prepolymers are reacted.

**6.** Process according to Claims 1 to 5, characterised in that ethylene oxide/propylene oxide polyethers or ethylene oxide/tetramethylene oxide polyethers are used as the hydrophilic polyethers.

7. Process for coating substrates, using polyurethane-ureas obtainable by the process according to Claims 1 to 6.

8. Process for coating two-dimensional structures of textiles or leather, using polyurethane-ureas obtainable by the process according to Claims 1 to 6.

9. Process according to Claim 8 for coating by the reversal process.

**Revendications**
**Revendications pour les Etats contractants suivants : AT, BE, DE, FR, GB, IT, NL**

1. Polyuréthanne-urées que l'on peut obtenir en faisant réagir
   a) un prépolymère NCO hydrophile que l'on prépare en utilisant un composant polyhydroxylé, qui contient de 9 à 100% en poids d'un polyéther possédant une fraction d'oxyde d'éthylène à raison de 40 à 80% en poids, avec
   b) un mélange de composés répondant aux formules

   $H_2N\text{-}R\text{-}NH_2$ (A)
   $H_2N\text{-}R\text{-}N = R^1$ (B)
   et
   $R^1 = N\text{-}R\text{-}N = R^1$ (C)

   dans lesquelles
   R représente un radical divalent aliphatique, cycloaliphatique ou araliphatique contenant de 2 à 18 atomes de carbone, qui peut également encore contenir les groupements -O- ou

$$\begin{array}{c}-N-\\ |\\ X\end{array}$$

   ($X = H, -CH_3, -C_2H_5, -C_3H_7, -C_4H_9$)
   et
   $R^1$ représente un radical aliphatique ou cycloaliphatique comme on l'obtient par élimination de l'oxygène d'une cétone ou d'un aldéhyde contenant de 2 à 8, de préférence de 3 à 6 atomes de carbone,
   les rapports molaires étant les suivants :

$$\frac{A}{B + C} = 1:20 \text{ à } 1:3,$$

$$\frac{B}{C} = 1:2 \text{ à } 2:1, \text{ ainsi que}$$

$$\frac{A + B + C}{H_2O} = 1:1,4 \text{ à } 1:20,$$

   comme durcisseur
   en présence d'eau et de solvants organiques de telle sorte que, de 30 à 70% des groupes NCO réagissent avec les groupes réactifs du mélange faisant office de durcisseur b) et les groupes NCO restants réagissent avec l'eau et éventuellement avec d'autres composants ajoutés.

**2.** Polyuréthanne-urées que l'on peut obtenir en faisant réagir

a) un prépolymère constitué par un mélange de

A) un prépolymère NCO hydrophile que l'on prépare en utilisant un composant polyhydroxylé, qui contient une fraction d'oxyde d'éthylène à raison de 40 à 80% en poids, et

B) un prépolymère NCO hydrophobe, ce mélange englobant ≦ 30% en poids du prépolymère hydrophile, avec

b) un mélange de composés répondant aux formules

$H_2N\text{-}R\text{-}NH_2$ (A)
$H_2N\text{-}R\text{-}N = R^1$ (B)
et
$R^1 = N\text{-}R\text{-}N = R^1$ (C)

dans lesquelles

R représente un radical divalent aliphatique, cycloaliphatique ou araliphatique contenant de 2 à 18 atomes de carbone, qui peut également encore contenir les groupements -O- ou

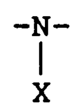

($X = H, -CH_3, -C_2H_5, -C_3H_7, -C_4H_9$)
et

$R^1$ représente un radical aliphatique ou cycloaliphatique comme on l'obtient par élimination de l'oxygène d'une cétone ou d'un aldéhyde contenant de 2 à 8, de préférence de 3 à 6 atomes de carbone,

les rapports molaires étant les suivants :

$$\frac{A}{B + C} = 1{:}20 \text{ à } 1{:}3,$$

$$\frac{B}{C} = 1{:}2 \text{ à } 2{:}1, \text{ ainsi que}$$

$$\frac{A + B + C}{H_2O} = 1{:}1{,}4 \text{ à } 1{:}20,$$

comme durcisseur

en présence d'eau et de solvants organiques de telle sorte que, de 30 à 70% des groupes NCO réagissent avec les groupes réactifs du mélange faisant office de durcisseur b) et les groupes NCO restants réagissent avec l'eau et éventuellement avec d'autres composants ajoutés.

**3.** Polyuréthanne-urées selon les revendications 1 et 2, que l'on peut obtenir en mettant en oeuvre un composant polyhydroxylé qui met en oeuvre de 16 à 64% en poids d'un polyéther possédant une fraction d'oxyde d'éthylène à raison de 40 à 80% en poids.

**4.** Polyuréthanne-urées selon les revendications 2 et 3, qui sont caractérisées en ce que le mélange de prépolymère mis en oeuvre contient de 40 à 80% en poids du prépolymère NCO hydrophile.

**5.** Polyuréthanne-urées selon les revendications 1 à 4, que l'on peut obtenir en faisant réagir de 40 à 60%

des groupes NCO des prépolymères NCO.

6. Polyuréthanne-urées selon les revendications 1 à 5, qui sont caractérisées en ce qu'on met en oeuvre, comme polyéther hydrophile, un polyéther d'oxyde d'éthylène/oxyde de propylène ou un polyéther d'oxyde d'éthylène/oxyde de tétraméthylène.

7. Procédé pour l'enduction de substrats en utilisant des polyuréthanne-urées selon les revendications 1 à 6.

8. Procédé pour l'enduction de produits à surface en textile ou en cuir, en utilisant des polyuréthanne-urées selon les revendications 1 à 6.

9. Procédé selon la revendication 8, pour une enduction conformément au procédé par inversion.

10. Substrat enduit à l'aide des polyuréthanne-urées selon les revendications 1 à 6, en particulier des produits à surface en textile ou en cuir.

**Revendications pour l'Etat contractant suivant : ES**

1. Procédé pour la préparation de polyuréthanne-urées par la mise en réaction de
   a) un prépolymère NCO hydrophile que l'on prépare en utilisant un composant polyhydroxylé, qui contient de 9 à 100% en poids d'un polyéther possédant une fraction d'oxyde d'éthylène à raison de 40 à 80% en poids, avec
   b) un mélange de composés répondant aux formules

   $H_2N\text{-}R\text{-}NH_2$ (A)
   $H_2N\text{-}R\text{-}N = R^1$ (B)
   et
   $R^1 = N\text{-}R\text{-}N = R^1$ (C)

   dans lesquelles
   R représente un radical divalent aliphatique, cycloaliphatique ou araliphatique contenant de 2 à 18 atomes de carbone, qui peut également encore contenir les groupements -O- ou

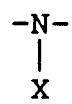

   ($X = H, -CH_3, -C_2H_5, -C_3H_7, -C_4H_9$)
   et
   $R^1$ représente un radical aliphatique ou cycloaliphatique comme on l'obtient par élimination de l'oxygène d'une cétone ou d'un aldéhyde contenant de 2 à 8, de préférence de 3 à 6 atomes de carbone,
   les rapports molaires étant les suivants :

$$\frac{A}{B + C} = 1:20 \text{ à } 1:3,$$

$$\frac{B}{C} = 1:2 \text{ à } 2:1, \text{ ainsi que}$$

$$\frac{A + B + C}{H_2O} = 1:1,4 \text{ à } 1:20,$$

comme durcisseur
en présence d'eau et de solvants organiques de telle sorte que, de 30 à 70% des groupes NCO réagissent avec les groupes réactifs du mélange faisant office de durcisseur b) et les groupes NCO restants réagissent avec l'eau et éventuellement avec d'autres composants ajoutés.

**2.** Procédé pour la préparation de polyuréthanne-urées par la mise en réaction de
a) un prépolymère constitué par un mélange de
A) un prépolymère NCO hydrophile que l'on prépare en utilisant un composant polyhydroxylé, qui contient une fraction d'oxyde d'éthylène à raison de 40 à 80% en poids, et
B) un prépolymère NCO hydrophobe, ce mélange englobant ≦ 30% en poids du prépolymère hydrophile, avec
b) un mélange de composés répondant aux formules

$H_2N\text{-}R_7\text{-}NH_2$ (A)
$H_2N\text{-}R\text{-}N = R^1$ (B)
et
$R^1 = N\text{-}R\text{-}N = R^1$ (C)

dans lesquelles
R représente un radical divalent aliphatique, cycloaliphatique ou araliphatique contenant de 2 à 18 atomes de carbone, qui peut également encore contenir les groupements -O- ou

$$\begin{array}{c}-N-\\ |\\ X\end{array}$$

($X = H, -CH_3, -C_2H_5, -C_3H_7, -C_4H_9$)
et
$R^1$ représente un radical aliphatique ou cycloaliphatique comme on l'obtient par élimination de l'oxygène d'une cétone ou d'un aldéhyde contenant de 2 à 8, de préférence de 3 à 6 atomes de carbone,

les rapports molaires étant les suivants :

$$\frac{A}{B + C} = 1:20 \text{ à } 1:3,$$

$$\frac{B}{C} = 1:2 \text{ à } 2:1, \text{ ainsi que}$$

$$\frac{A + B + C}{H_2O} = 1:1{,}4 \text{ à } 1:20,$$

comme durcisseur
en présence d'eau et de solvants organiques de telle sorte que, de 30 à 70% des groupes NCO réagissent avec les groupes réactifs du mélange faisant office de durcisseur b) et les groupes NCO restants réagissent avec l'eau et éventuellement avec d'autres composants ajoutés.

**3.** Procédé selon les revendications 1 et 2, d'après lequel on met en oeuvre un composant polyhydroxylé qui met en oeuvre de 16 à 64% en poids d'un polyéther possédant une fraction d'oxyde d'éthylène à raison de 40 à 80% en poids.

**4.** Procédé selon les revendications 2 et 3, caractérisé en ce que le mélange de prépolymère mis en oeuvre contient de 40 à 80% en poids du prépolymère NCO hydrophile.

**5.** Procédé selon les revendications 1 à 4, caractérisé en ce que l'on fait réagir de 40 à 60% des groupes NCO des prépolymères NCO.

**6.** Procédé selon les revendications 1 à 5, caractérisé en ce qu'on met en oeuvre, comme polyéther hydrophile, un polyéther d'oxyde d'éthylène/oxyde de propylène ou un polyéther d'oxyde d'éthylène/oxyde de tétraméthylène.

**7.** Procédé pour l'enduction de substrats en utilisant des polyuréthanne-urées que l'on peut obtenir conformément au procédé selon les revendications 1 à 6.

**8.** Procédé pour l'enduction de produits à surface en textile ou en cuir, en utilisant des polyuréthanne-urées que l'on peut obtenir conformément au procédé selon les revendications 1 à 6.

**9.** Procédé selon la revendication 8, pour une enduction conformément au procédé par inversion.